# EUROPEAN PATENT APPLICATION

(11) **EP 2 897 331 A1**
(43) Date of publication of application: **22.07.2015**
(21) Application number: 15151357.9
(22) Date of filing: 16.01.2015
(51) Int. Cl.: H04L 12/715, H04L 12/707

(54) **A network element for a data transfer network**

(30) Priority: 21.01.2014 FI 20145054
(71) Applicant: Coriant Oy, 02630 Espoo (FI)
(72) Inventor: Hallivuori, Ville, 02610 Espoo (FI)
(74) Representative: Berggren Oy Ab

(57) **Abstract**

A network element (201) for a data transfer network comprises a processing system (221) for determining, in accordance with pre-determined rules, an eligibility indicator for each of data transfer paths providing access to a given destination. Each eligibility indicator is based on information related to the data transfer path under consideration, and the eligibility indicators of two or more of the data transfer paths express whether these two or more of the data transfer paths are eligible for being alternatives to each other for the purpose of e.g. load-sharing and/or protection. Differences which are between attributes of alternative data transfer paths but which are irrelevant from the viewpoint of load-sharing and/or protecting do not adversely prevent the load-sharing and/or protecting because the rules for determining the eligibility indicators can be defined so that the irrelevant differences have no effect on the determination of the eligibility indicators.

## Description

### Field of the invention

The invention relates generally to managing alternative data transfer paths in a data transfer network for the purpose of e.g. load-sharing and/or protection. A data transfer network can be, for example but not necessarily, a software-defined network "SDN". More particularly, the invention relates to a network element for a data transfer network. Furthermore, the invention relates to a method and to a computer program for managing alternative data transfer paths in a data transfer network.

### Background

In network elements of many data transfer networks there is a need to manage alternative data transfer paths for the purpose of for example load-sharing and/or protection. Each network element can be, for example, an Internet Protocol "IP" router, a multiprotocol label switching "MPLS" node, a packet optical switch, and/or an Ethernet switch. In many load-sharing and protecting schemes, data transfer paths that are mutually alternative for the load-sharing and/or protecting purposes are selected on the basis of path attributes related to the data transfer paths. The path attributes may comprise for example: local preferences of the data transfer paths, Interior Gateway Protocol "IGP" costs of the data transfer paths, sources of advertisement of the data transfer paths, Multi Exit Discriminators "MED", and/or Autonomous System "AS"-path lengths. Data transfer paths which are considered to be eligible for being alternatives to each other for the purpose of load-sharing and/or protecting must share most of their path attributes.

The approach of the kind described above is however not free from challenges. One of the challenges is related to the cases where two or more data transfer paths which, in practice, are eligible for being alternatives to each other have such a difference between their path attributes that a management process does not consider these data transfer paths to be eligible for being alternatives to each other. Hence, in some cases, such differences in the path attributes which are irrelevant from the viewpoint of the load-sharing and/or protecting may adversely prevent the load-sharing and/or protecting.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new method for managing alternative data transfer paths in a data transfer network.

A method according to the invention comprises determining, in accordance with pre-determined rules, an eligibility indicator for each of data transfer paths providing access to a given destination. Each of the eligibility indicators is based on information related to the data transfer path under consideration, and the eligibility indicators of two or more of the data transfer paths express whether these two or more of the data transfer paths, which provide access to the destination, are eligible for being alternatives to each other.

The technical effect achieved with the above-defined method is that differences which are between path attributes of alternative data transfer paths but which are irrelevant from the viewpoint of for example load-sharing and/or protecting do not adversely prevent the load-sharing and/or protecting, because the policy, i.e. the above-mentioned pre-determined rules, for determining the eligibility indicators can be defined so that the irrelevant differences have no effect on the determination of the eligibility indicators. After the eligibility indicators have been formed, all or some of the path attributes can be omitted when managing alternative data transfer paths in the data transfer network.

In accordance with the invention, there is provided also a new network element for a data transfer network. The network element can be, for example, an Internet Protocol "IP" router, a multiprotocol label switching "MPLS" switch, a packet optical switch, and/or an Ethernet switch. A network element according to the invention comprises
- a data transfer interface for transmitting data to the data transfer network and for receiving data from the data transfer network, and
- a processing system for determining, in accordance with pre-determined rules, an eligibility indicator for each of data transfer paths providing access to a given destination, each eligibility indicator being based on information related to the data transfer path under consideration, and the eligibility indicators of two or more of the data transfer paths expressing whether these two or more of the data transfer paths, which provide access to the destination, are eligible for being alternatives to each other.

In accordance with the invention, there is provided also a new computer program for managing alternative data transfer paths in a data transfer network. A computer program according to the invention comprises computer executable instructions for controlling a programmable processing system of a network element of the data transfer network to:
- determine, in accordance with pre-determined rules, an eligibility indicator for each of data transfer paths providing access to a given destination, each eligibility indicator being based on information related to the data transfer path under consideration, and the eligibility indicators of two or more of the data transfer paths expressing whether these two or more of the data transfer paths, which provide access to the destination, are eligible for being alternatives to each other.

In accordance with the invention, there is provided also a new computer program product. The computer program product comprises a non-volatile computer readable medium, e.g. a compact disc "CD", encoded with a computer program according to the invention.

The above-mentioned data transfer network can be, for example but not necessarily, a software-defined network "SDN" where the control plane is separated from the data plane so that the control plane is implemented in one or more controllers that can be separate from data-forwarding network elements of the software-defined network and the data plane is implemented in the data-forwarding network elements.

For another example, the above-presented principles are especially applicable in Border Gateway Protocol "BGP" routing.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. The features recited in the accompanied dependent claims are mutually freely combinable unless otherwise explicitly stated. Furthermore, it is to be understood that the use of "a" or "an", i.e. a singular form, throughout this document does not exclude a plurality.

### Brief description of the figures

The exemplifying and non-limiting embodiments of the invention and their advantages are explained in greater detail below with reference to the accompanying drawings, in which:
figure 1 shows a schematic illustration of an exemplifying data transfer network comprising at least one network element according to an exemplifying and non-limiting embodiment of the invention,
figure 2 shows a schematic illustration of a network element according to an exemplifying and non-limiting embodiment of the invention, and
figure 3 shows a flow chart of a method according to an exemplifying and non-limiting embodiment of the invention for managing alternative data transfer paths in a data transfer network.

### Description of exemplifying embodiments

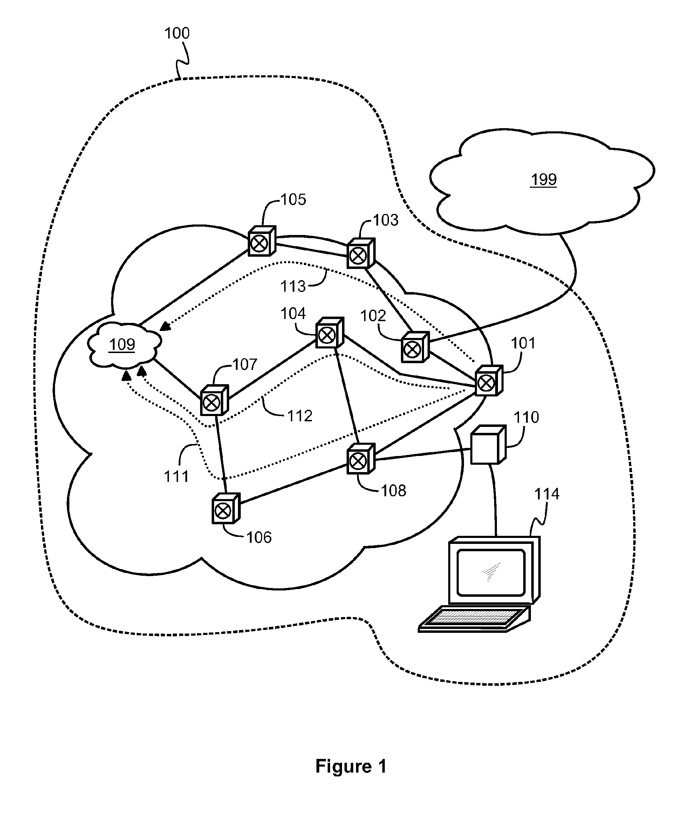

Figure 1 shows a schematic illustration of an exemplifying data transfer network 100. The data transfer network comprises network elements 101, 102, 103, 104, 105, 106, 107, and 108. The network elements 101-108 of this exemplifying data transfer network are mutually interconnected with data transfer links as illustrated in figure 1. The network element 102 acts as a gateway to an external network 199 that can be e.g. the global Internet. Furthermore, the exemplifying data transfer network 100 may comprise other network elements that are not shown in figure 1. Each of the network elements may be e.g. an Internet Protocol "IP" router, a multiprotocol label switching "MPLS" node, a packet optical switch, and/or an Ethernet switch. Each network element may consist of a single apparatus or a combination of a plurality of apparatuses.

Without limiting the generality and merely for illustrative purposes, we consider data transfer paths 111, 112, and 113 which are illustrated in figure 1 with the aid of dashed line arrows. The data transfer path 111 extends from the network element 101 to a sub-network 109 via network elements 108, 106 and 107, the data transfer path 112 extends from the network element 101 to the sub-network 109 via network elements 104 and 107, and the data transfer path 113 extends from the network element 101 to the sub-network 109 via network elements 102, 103 and 105. The sub-network 109 can be a single network element or an entity comprising a plurality of interconnected network elements.

Without limiting the generality and merely for illustrative purposes, we consider the operation of the network element 101 from which there are the above-mentioned three different data transfer paths 111, 112, and 113 to the sub-network 109. In this exemplifying case, we assume that the network element 108 has advertised to the network element 101 that the network element 108 provides access to the sub-network 109, the network element 104 has advertised to the network element 101 that the network element 104 provides access to the sub-network 109, and the network element 102 has advertised to the network element 101 that the network element 102 provides access to the sub-network 109. Hence, the network element 101 is aware of that there are the three possible data transfer paths to a destination represented by the sub-network 109.

The network element 101 is adapted to determine, in accordance with pre-determined rules, an eligibility indicator for each of the data transfer paths 111-113 providing access to the sub-network 109. Each of the eligibility indicators is based on information related to the data transfer path under consideration, and the eligibility indicators of two or more of the data transfer paths express whether these two or more of the data transfer paths are eligible for being alternatives to each other. For example, the eligibility indicators of the data transfer paths 111 and 112 indicate whether these data transfer paths 111 and 112 are eligible for being alternatives to each other e.g. for load-sharing and/or protection purposes. It is worth noting that the eligibility indicators do not have to be unique within the network element 101 because a same eligibility indicator value or symbol can be used for expressing that first data transfers paths, which provide access to a first destination, are eligible for being alternatives of each other and that second data transfers paths, which provide access to a second destination, are eligible for being alternatives of each other. The above-mentioned information related to the data transfer paths 111-113 and used for determining the eligibility indicators may comprise for example: sources of advertisement of the data transfer paths, next-hop network elements that are next on each of the data transfer paths, peers of the network element 101 on each of the data transfer paths, and/or Border Gateway Protocol "BGP" community attributes related to the data transfer paths. The above-mentioned pre-determined rules, i.e. the policy, for determining the eligibility indicators may comprise for example a first rule indicating that a data transfer path providing access to the sub-network 109 and advertised by the network element 108 could cause unwanted loops in conjunction with other paths, a second rule indicating that a data transfer path providing access to the sub-network 109 and advertised by the network element 104 is usable, and a third rule indicating that a data transfer path providing access to the sub-network 109 and advertised by the network element 102 is usable. In this exemplifying case, the eligibility indicators of the data transfer paths 111-113 indicate that the data transfer paths 112 and 113 are eligible for being alternatives to each other, but the data transfer path 111 is not eligible for being an alternative to neither the data transfer path 112 nor to the data transfer path 113. The network element 101 can be adapted to forward data traffic addressed to the sub-network 109 to the data transfer paths 112 and 113 which are, according to their eligibility indicators, eligible for being alternatives to each other. In a case of load-sharing, the above-mentioned data traffic can be shared between the mutually alternative data transfer paths 112 and 113 on the basis of e.g. data flows contained by the data traffic. In a case of 1/1 protecting, one of the data transfer paths 112 and 113 can be used as a primary path which is back-upped by the other one of the data transfer paths 112 and 113. In a case of 1+1 protection, all the data traffic can be transmitted to both of the data transfer paths 112 and 113.

In an exemplifying and non-limiting case, the data transfer network 100 is a software-defined network "SDN", where the control plane is separated from the data plane so that the control plane is implemented in one or more controllers that can be separate from the network elements for forwarding payload data and the data plane is implemented in the network elements. In the exemplifying case illustrated in figure 1, the data transfer network 110 comprises a controller 110 that can be a part of a controller system constituted by many controllers of the software-defined network. It is also possible that the controller alone constitutes the controller system of the software-defined network. Furthermore, the controller can be a single apparatus or a combination of a plurality of apparatuses capable of communicating with each other. In the exemplifying case illustrated in figure 1, the controller 110 is connected with a data transfer link to the network element 108 and a user interface device 114 is connected to the controller. It is to be noted that the controller 110 or one or more parts of it can also act as a network element that can be e.g. an Internet Protocol "IP" router, a multiprotocol label switching "MPLS" switch, a packet optical switch, and/or an Ethernet switch. The controller 110 can be adapted to determine, in accordance with the pre-determined rules, the eligibility indicator for each of the data transfer paths 111-113 providing access to the sub-network 109. Furthermore, the controller can be adapted to address and transmit configuration data including the eligibility indicators to the network element 101 which is, among other network elements, being configured to be capable of forwarding data traffic addressed to the sub-network 109. The controller 110 and the network element 101 can be arranged to run OpenFlow or some other suitable configuration protocol in order to transfer the configuration data from the controller 110 to the network element 101. More details about the above-mentioned OpenFlow can be found from "OpenFlow Switch Specification" managed by the Open Networking Foundation "ONF". The configuration data enables the network element 101 to construct and maintain a configuration system which may comprise for example a system of interconnected look-up tables defining actions to be carried out in different operational situations. The look-up tables may include for example one or more successive flow tables and a group table. Each flow table contains a set of flow entries. Each flow entry may consist of match fields, counters, and a set of actions to apply to matching data frames. The group table contains group entries, where each group entry may contain a list of actions to be directed to data frames defined to belong to a particular group. An action defined by the configuration data may comprise for example: recording data into a memory, modifying the data, selecting one or more of egress ports of the network element and forwarding the data and its possible duplicates to the selected one or more egress ports, selecting one or more look-up tables of the configuration system of the network element and executing one or more look-ups from the selected look-up tables, performing arithmetic operations, branching operations, performing logical operations, reading metadata associated with the data being managed, writing metadata associated with the data, modifying metadata associated with the data, dropping the data, and/or duplicating the data. It is also possible that the configuration data transferred from the controller 110 to the network element 101 comprises the pre-determined rules, i.e. the policy, for determining the above-mentioned eligibility indicators, and the network element 101 is adapted to determine the eligibility indicators on the basis of the pre-determined rules and information related to data transfer paths under consideration.

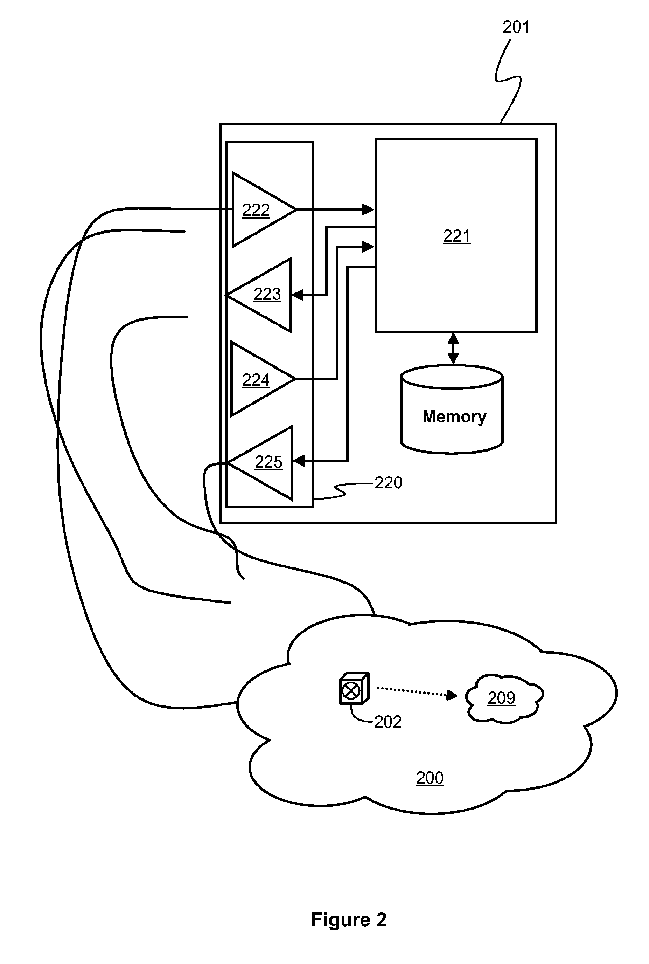

Figure 2 shows a schematic illustration of a network element 201 according to an exemplifying and non-limiting embodiment of the invention for a data transfer network. The network element can be, for example, an Internet Protocol "IP" router, a Multiprotocol label switching "MPLS" switch, a packet optical switch, and/or an Ethernet switch. The network element 201 comprises a data transfer interface 220 for receiving data and for transmitting data. The data transfer interface 220 comprises ingress ports 222 and 224 and egress ports 223 and 225 for connecting via data transfer links to other elements of the software-defined network. In figure 2, the elements of the data transfer network other than the network element 201 are depicted with a cloud 200. The network element comprises a processing system 221 for determining, in accordance with pre-determined rules, an eligibility indicator for each of data transfer paths providing access to a destination 209. Each of the eligibility indicators is based on information related to the data transfer path under consideration, and the eligibility indicators of two or more of the data transfer paths express whether these two or more of the data transfer paths are eligible for being alternatives to each other for the purpose of e.g. load-sharing and/or protection. The network element 201 can be adapted to receive policy configuration data which defines the pre-determined rules to be used when determining the eligibility indicators. Hence, the network element can be configurable to apply desired rules for determining the eligibility indicators. The policy configuration data can be received from the data transfer network via the data transfer interface 220 and/or the network element may comprise a data interface for receiving the policy configuration data from e.g. a user interface device connectable to the data interface.

In a network element according to an exemplifying and non-limiting embodiment of the invention, the processing system 221 is adapted to control the data transfer interface 220 to forward data traffic addressed to the destination 209 to two or more of those of the data transfer paths which are, according to their eligibility indicators, eligible for being alternatives to each other.

In a network element according to an exemplifying and non-limiting embodiment of the invention, the processing system 221 is adapted to control the data transfer interface 220 to transmit configuration data including the eligibility indicators to another network element 202 which is to be configured to be capable of forwarding data traffic addressed to the destination 209. In this case, the network element 201 can be for example a controller of a software-defined network "SDN".

In a network element according to an exemplifying and non-limiting embodiment of the invention, the processing system 221 is adapted to maintain a configuration table, e.g. a routing table, indicative of forwarding actions to be directed to data addressed to the destination 209 and to data addressed to other destinations. The processing system 221 is adapted to write the eligibility indicators to the configuration table so that each of at least two of the data transfer paths is associated with the eligibility indicator related to the data transfer path under consideration.

In a network element according to an exemplifying and non-limiting embodiment of the invention, the processing system 221 is adapted to determine the eligibility indicators on the basis of information indicating at least one of the following: sources of advertisement of the data transfer paths, next-hop network elements that are next on each of the data transfer paths, peers of the network element 201 on each of the data transfer paths, and/or Border Gateway Protocol "BGP" community attributes related to the data transfer paths.

The processing system 221 of the network element 201 can be implemented with one or more processor circuits, each of which can be a programmable processor circuit provided with appropriate software, a dedicated hardware processor such as, for example, an application specific integrated circuit "ASIC", or a configurable hardware processor such as, for example, a field programmable gate array "FPGA".

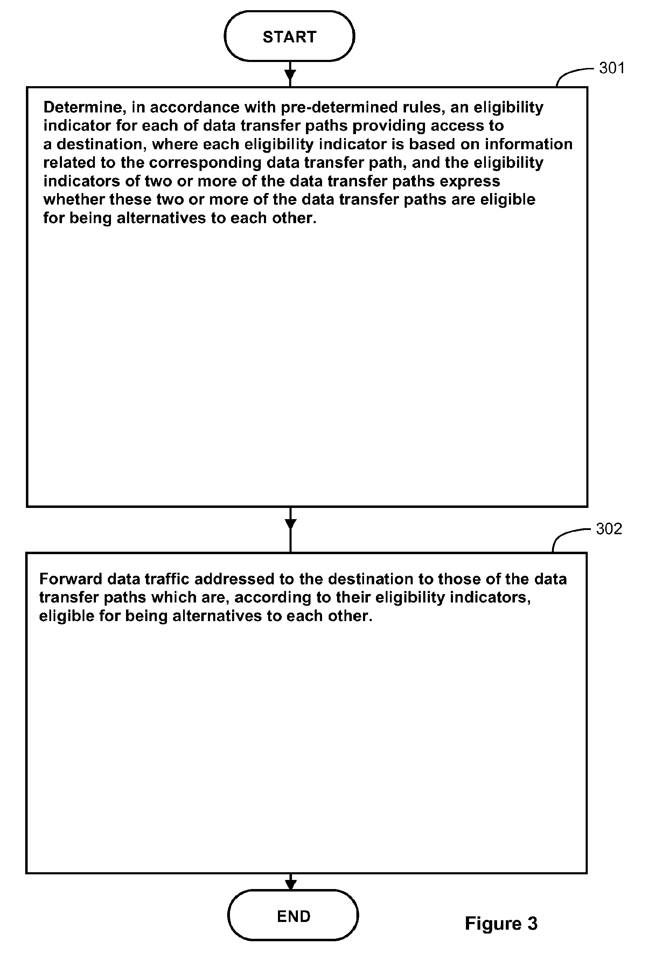

Figure 3 shows a flow chart of a method according to an exemplifying and non-limiting embodiment of the invention for managing alternative data transfer paths in a data transfer network. The method comprises determining 301, in accordance with pre-determined rules, an eligibility indicator for each of data transfer paths providing access to a given destination. Each of eligibility indicators is based on information related to the data transfer path under consideration, and the eligibility indicators of two or more of the data transfer paths express whether these two or more of the data transfer paths, which provide access to the destination, are eligible for being alternatives to each other.

A method according to an exemplifying and non-limiting embodiment of the invention comprises forwarding 302 data traffic which is addressed to the destination to two or more of those of the data transfer paths which are, according to their eligibility indicators, eligible for being alternatives to each other.

A method according to an exemplifying and non-limiting embodiment of the invention comprises transmitting configuration data including the eligibility indicators to a network element which is to be configured to be capable of forwarding data traffic addressed to the destination. The method according to this exemplifying embodiment of the invention can be run for example in a controller of a software-defined network "SDN".

A method according to an exemplifying and non-limiting embodiment of the invention comprises maintaining a configuration table, e.g. a routing table, indicative of forwarding actions to be directed to data addressed to the destination, and writing the eligibility indicators to the configuration table so that each of at least two of the data transfer paths is associated with the eligibility indicator related to the data transfer path under consideration.

In a method according to an exemplifying and non-limiting embodiment of the invention, the eligibility indicators are determined on the basis of information indicating at least one of the following: sources of advertisement of the data transfer paths, next-hop network elements that are next on the data transfer paths, network elements that are on the data transfer paths peers of the network element using the eligibility indicators, and/or Border Gateway Protocol "BGP" community attributes of the data transfer paths.

In a method according to an exemplifying and non-limiting embodiment of the invention, the data transfer network is a software-defined network "SDN".

A computer program according to an exemplifying and non-limiting embodiment of the invention comprises computer executable instructions for controlling a programmable processing system to carry out actions related to a method according to any of the above-described exemplifying embodiments of the invention.

A computer program according to an exemplifying and non-limiting embodiment of the invention comprises software modules for managing alternative data transfer paths of a data transfer network. The software modules comprise computer executable instructions for controlling a programmable processing system of a network element of the data transfer network to:
- determine, in accordance with pre-determined rules, an eligibility indicator for each of data transfer paths providing access to a given destination, where each of the eligibility indicators is based on information related to the data transfer path under consideration, and the eligibility indicators of two or more of the data transfer paths express whether these two or more of the data transfer paths, which provide access to the destination, are eligible for being alternatives to each other.

A computer program according to an exemplifying and non-limiting embodiment of the invention further comprises software modules for controlling the programmable processing system to configure the network element to forward data traffic addressed to the destination to two or more of those of the data transfer paths which are, according to their eligibility indicators, eligible for being alternatives to each other.

The software modules can be e.g. subroutines or functions implemented with a suitable programming language and with a compiler suitable for the programming language and the programmable processing system.

A computer program product according to an exemplifying embodiment of the invention comprises a computer readable medium, e.g. a compact disc "CD", encoded with a computer program according to an exemplifying embodiment of invention.

A signal according to an exemplifying embodiment of the invention is encoded to carry information defining a computer program according to an exemplifying embodiment of invention.

The specific examples provided in the description given above should not be construed as limiting the scope and/or the applicability of the appended claims.

## Claims

1. A network element (201) for a data transfer network, the network element comprising:
- a data transfer interface (220) for transmitting data to the data transfer network and for receiving data from the data transfer network, and
**characterized in that** the network element comprises a processing system (221) for:
- determining, in accordance with pre-determined rules, an eligibility indicator for each of data transfer paths providing access to a destination, each eligibility indicator being based on information related to the data transfer path under consideration, and the eligibility indicators of two or more of the data transfer paths expressing whether these two or more of the data transfer paths, which provide access to the destination, are eligible for being alternatives to each other.

2. A network element according to claim 1, wherein the processing system is adapted to control the data transfer interface to forward data traffic addressed to the destination to two or more of those of the data transfer paths which are, according to their eligibility indicators, eligible for being alternatives to each other.

3. A network element according to claim 1 or 2, wherein the processing system is adapted to control the data transfer interface to transmit configuration data including the eligibility indicators to another network element which is to be configured to be capable of forwarding data traffic addressed to the destination.

4. A network element according to any of claims 1-3, wherein the processing system is adapted to maintain a configuration table indicative of forwarding actions to be directed to data addressed to the destination, and to write the eligibility indicators to the configuration table so that each of at least two of the data transfer paths is associated with the eligibility indicator related to the data transfer path under consideration.

5. A network element according to any of claims 1-4, wherein the processing system is adapted to determine the eligibility indicators on the basis of information indicating at least one of the following: sources of advertisement of the data transfer paths, next-hop network elements that are next on each of the data transfer paths, peers of the network element on each of the data transfer paths, Border Gateway Protocol "BGP" community attributes related to the data transfer paths.

6. A network element according to claim 3, wherein the network element is a controller of a software-defined network.

7. A network element according to any of claims 1-6, wherein the network element is adapted to receive policy configuration data defining the pre-determined rules to be used when determining the eligibility indicators.

8. A network element according to any of claims 1-7, wherein the network element is at least one of the following: an Internet Protocol IP router, a MultiProtocol Label Switching MPLS switch, a packet optical switch, an Ethernet switch.

9. A method for managing alternative data transfer paths of a data transfer network, **characterized in that** the method comprises determining (301), in accordance with pre-determined rules, an eligibility indicator for each of data transfer paths providing access to a destination, each eligibility indicator being based on information related to the data transfer path under consideration, and the eligibility indicators of two or more of the data transfer paths expressing whether these two or more of the data transfer paths, which provide access to the destination, are eligible for being alternatives to each other.

10. A method according to claim 9, wherein the method comprises forwarding (302) data traffic addressed to the destination to two or more of those of the data transfer paths which are, according to their eligibility indicators, eligible for being alternatives to each other.

11. A method according to claim 9 or 10, wherein the method comprises transmitting configuration data including the eligibility indicators to a network element which is to be configured to be capable of forwarding data traffic addressed to the destination.

12. A method according to any of claims 9-11, wherein the method comprises maintaining a configuration table indicative of forwarding actions to be directed to data addressed to the destination, and writing the eligibility indicators to the configuration table so that each of at least two of the data transfer paths is associated with the eligibility indicator related to the data transfer path under consideration.

13. A method according to any of claims 9-12, wherein the eligibility indicators are determined on the basis of information indicating at least one of the following: sources of advertisement of the data transfer paths, next-hop network elements that are next on the data transfer paths, network elements that are on the data transfer paths peers of a network element using the eligibility indicators, Border Gateway Protocol "BGP" community attributes of the data transfer paths.

14. A computer program for managing alternative data transfer paths of a data transfer network, **characterized in that** computer program comprises computer executable instructions for controlling a programmable processing system of a network element of the data transfer network to:
- determine, in accordance with pre-determined rules, an eligibility indicator for each of data transfer paths providing access to a destination, each eligibility indicator being based on information related to the data transfer path under consideration, and the eligibility indicators of two or more of the data transfer paths expressing whether these two or more of the data transfer paths, which provide access to the destination, are eligible for being alternatives to each other.

15. A computer program according to claim 14, wherein the computer program further comprises computer executable instructions for controlling the programmable processing system to configure the network element to forward data traffic addressed to the destination to two or more of those of the data transfer paths which are, according to their eligibility indicators, eligible for being alternatives to each other.
